# EUROPEAN PATENT SPECIFICATION

(11) **EP 3 391 042 B1**
(45) Date of publication and mention of the grant of the patent: **22.07.2020**
(21) Application number: 16809744.2
(22) Date of filing: 07.12.2016
(51) Int. Cl.: G01N 30/60, B01D 15/18, B01D 15/22, G01N 30/88, G01N 30/46

(54) **STACKABLE CHROMATOGRAPHY COLUMN MODULES WITH INLET AND OUTLET VALVES**
STAPELBARE CHROMATOGRAPHIESÄULENMODULE MIT EIN- UND AUSLASSVENTILEN
MODULES EMPILABLES DE COLONNE DE CHROMATOGRAPHIE À VANNES D'ENTRÉE ET DE SORTIE

(30) Priority: 16.12.2015 GB 201522177
(43) Date of publication of application: 24.10.2018
(73) Proprietor: GE Healthcare BioProcess R&D AB, 751 84 Uppsala (SE)
(72) Inventor: HERMANSSON, Dan, 751 84 Uppsala (SE); GEBAUER, Klaus, 751 84 Uppsala (SE); LUNDKVIST, Mats, 751 84 Uppsala (SE)
(74) Representative: Larsson, Jan Anders
(86) International application number: PCT/EP2016/080000
(87) International publication number: WO 2017/102482

(56) References cited:
- WO-A1-92/04958
- WO-A1-2011/152788
- WO-A1-2013/147688
- WO-A1-2016/015952
- JP-A- H0 989 861
- JP-U- H0 299 345
- US-A- 5 151 116

## Description

### Technical field of the invention

The present invention relates to chromatography columns and in particular to stackable chromatography column modules for processing of biopharmaceuticals. The invention also relates to stacks of chromatography column modules and to methods of using such stacks for purification of biomolecules.

### Background of the invention

The use of pre-packed stackable chromatography column modules or cartridges has a potential to increase flexibility in pilot and process scale bio-manufacturing. The flexibility arises from the ability to build a larger system for the required capacity and contaminant clearance from a number of standardized modules. The modules are supplied pre-packed, which means that the user does not have to perform any complex packing operations and they can be used as disposable products, i.e. they can be discarded after one or more batches or campaigns.

An issue with pre-packed modules is that the chromatography resin is packed in a liquid and when the modules are connected to each other or to the system, liquid may leak out. This is also an issue when disconnecting the modules after use, particularly if they have been used in the processing of biohazardous or toxic substances. Further, in many bioprocessing operations a high degree of hygiene or even sterility is required. For this reason it is also desirable to avoid any contamination of the module content from the exterior during connection.

Accordingly there is a need for convenient solutions allowing leak-free connection/disconnection of chromatography column modules and also for solutions allowing sanitary connection of the modules.

US 5,151,116 A discloses a chromatography column module stackable with like chromatography modules according to the preamble of claim 1.

WO 2011/152788 A1 discloses stackable chromatography column modules, the modules fluidically connected in parallel.

JPH 0299345 U and JPH 0989861 A disclose stackable chromatography modules.

### Summary of the invention

One aspect of the invention is to provide a stackable chromatography column module that can conveniently be connected with like chromatography column modules in a stack. This is achieved with a module as defined in claim 1.

One advantage is that the chromatography column modules can be connected and/or disconnected without leakage of liquid from the modules.

A second aspect of the invention is a stack of chromatography column modules that can be assembled and/or disassembled without leakage of liquid. This is achieved with a stack as defined in claim 10.

A third asnect of the invention is to provide a use of the chromatography column module stack for separation of a biomolecule. This is achieved with a use as defined in claim 12.

Further suitable embodiments of the invention are described in the dependent claims.

### Drawings

Fig. 1 shows a cross section of a chromatography column module of the invention (side view).
Fig. 2 shows a chromatography column module of the invention (side view).
Fig. 3 shows a cross section of a stack of two chromatography column modules of the invention (side view).
Fig. 4 shows a stack of two chromatography column modules of the invention (side view).
Fig. 5 shows a detailed cross section of an inlet and an outlet of two connected chromatography column modules of the invention (side view).
Fig. 6 shows a detailed cross section of an inlet and an outlet of two chromatography column modules of the invention before connection (side view).
Fig. 7 shows a detailed cross section of the aseptic connector inlet and outlet of two chromatography column modules of the invention before connection (side view).
Fig. 8 shows a detailed cross section of the aseptic connector inlet and outlet of two chromatography column modules of the invention before connection (side view).
Fig. 9 shows a stack of chromatography column modules and a fluidics plate according to the invention (schematic side view).
Fig. 10 shows a detailed cross section of an inlet and an outlet of two chromatography column modules of the invention before connection (side view).
Fig. 11 shows a detailed cross section of an inlet and an outlet of two connected chromatography column modules of the invention (side view).

### Detailed description of embodiments

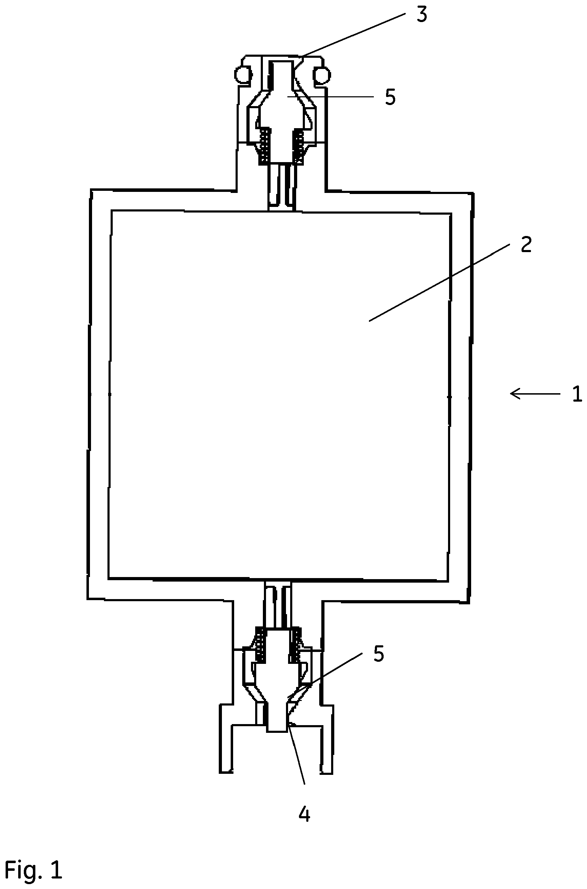

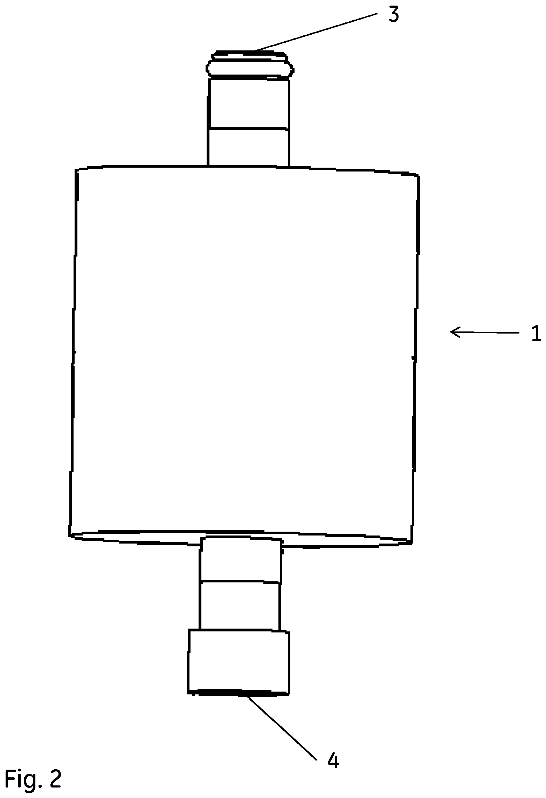

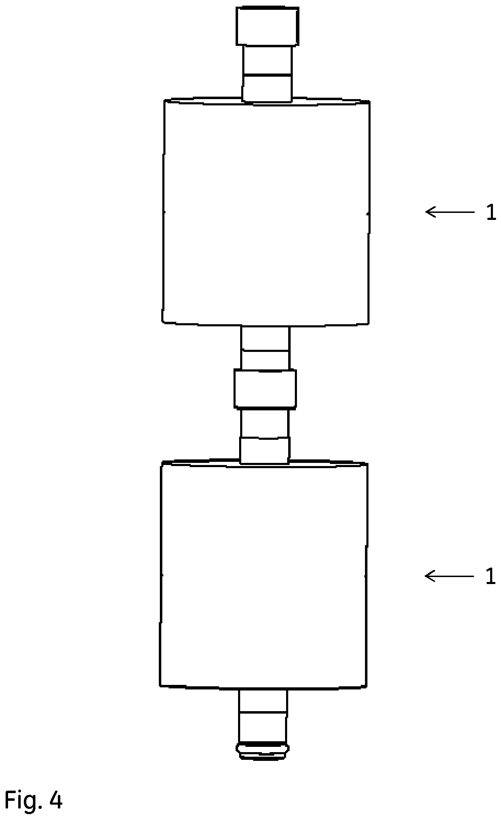

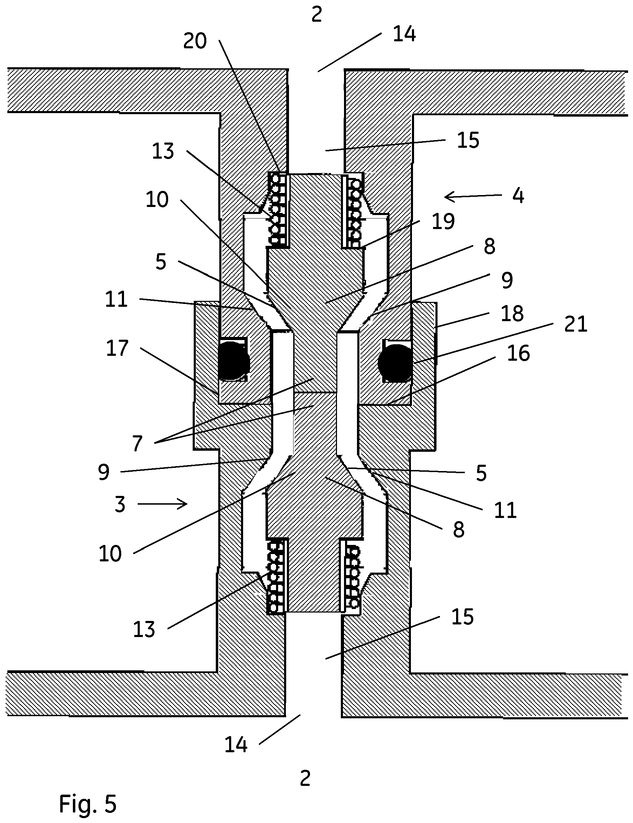

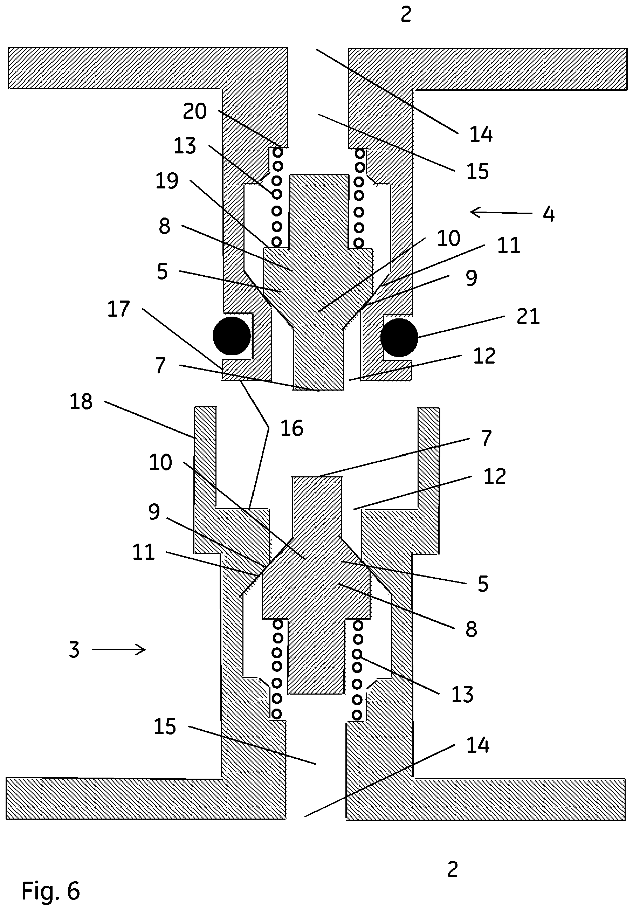

In one aspect, illustrated by Figs. 1-9, the present invention discloses a chromatography column module **1** stackable with like chromatography modules. The chromatography column module comprises a column chamber **2,** which can typically contain a packed bed of chromatography resin particles and a liquid. The column chamber is fluidically connected to a column inlet **3;103;203;303** and a column outlet **4;104;204;304,** wherein the column inlet and the column outlet each comprises a valve **5;305,** arranged to move from a closed position to an open position upon connection of the column inlet or outlet with a) a column outlet or inlet of a like chromatography module or b) with an outlet or inlet of a fluidics plate **6.** Both inlets and outlets may have a circular cross section and typically comprise an inner aperture **14,** in fluidic connection with the column chamber, a bore **15** allowing fluidic connection with an outer aperture **12** in an abutment surface **16** and a valve member **8;308** which closes the bore when in a closed position and leaves the bore open when in an open position. The inlet may comprise a male connector **17,** e.g. with a sealing O-ring **21,** and the outlet a female connector **18,** or vice versa, for coupling with a like chromatography module or a fluidics plate with the outer apertures **12** and abutment surfaces **16** of the respective inlets and outlets in contact with each other. The fluidics plate **6** can e.g. be a flow control block as described in detail in copending application PCT EP2015/065311 , for allowing flexible connection of modules in various combinations of parallel and/or serial mode. It can however also be a plate comprising e.g. a concentration detector and/or a valve **50** and a branch line **51** for diverting or adding flow upon certain conditions, useful e.g. in continuous chromatography setups such as periodic countercurrent chromatography (see e.g. US20120091063A1. Each of the column inlet and the column outlet can suitably further comprise a valve opening member **7;307** arranged to act upon the valve of a column inlet or outlet of a like chromatography column module or a flow plate upon connection. The valve opening member can typically engage the valve member mechanically when an inlet and an outlet are connected and urge the valve member into an open position. The valve may e.g. comprise a spring-loaded valve member **8;308** resting on a valve seat **9;309** when the valve is in the closed position and wherein, upon connection with a column inlet or outlet of a like chromatography column module, a valve opening member **7;307** causes the valve to move to an open position by urging the valve member away from the valve seat, creating an open passageway through the inlet or outlet. The valve member may e.g. comprise a frustoconical segment **10;310,** which when the valve is in the closed position is in sealing abutment against a frustoconical bore segment **11;311** of the column inlet or outlet bore **15.** The spring-loading may e.g. be achieved by a spring **13,** engaging a valve member annular ring **19** and a bore annular rim **20.** The valve opening member may be integral with the valve member and may extend through an outer aperture **12** of the column inlet and outlet respectively, when in a non-connected state (i.e. when the valve is in a closed position). Thus, when the inlet and outlet are connected and the abutment surfaces **16** are brought into contact, both valve opening members are pushed inwards (in a direction towards the inner apertures), urging both valve members **8** away from the valve seats **9** into an open position.

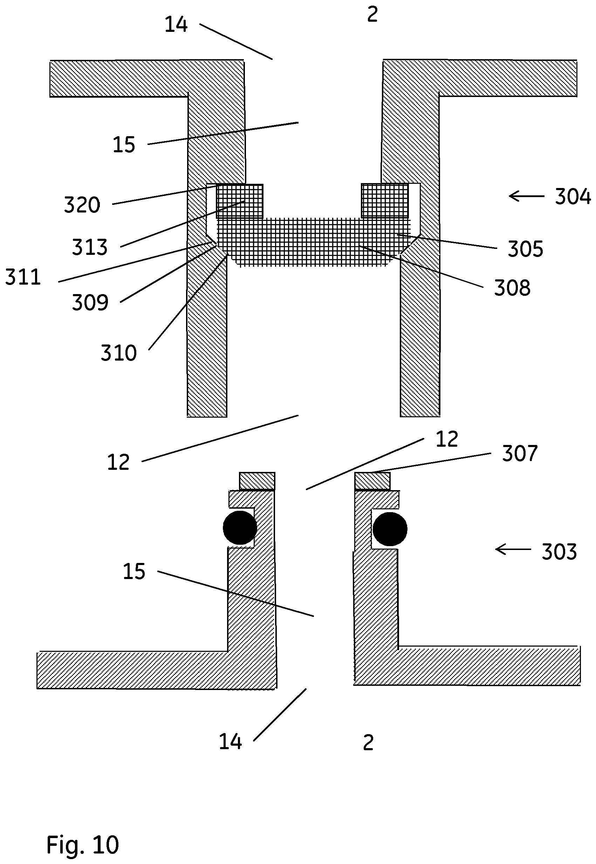

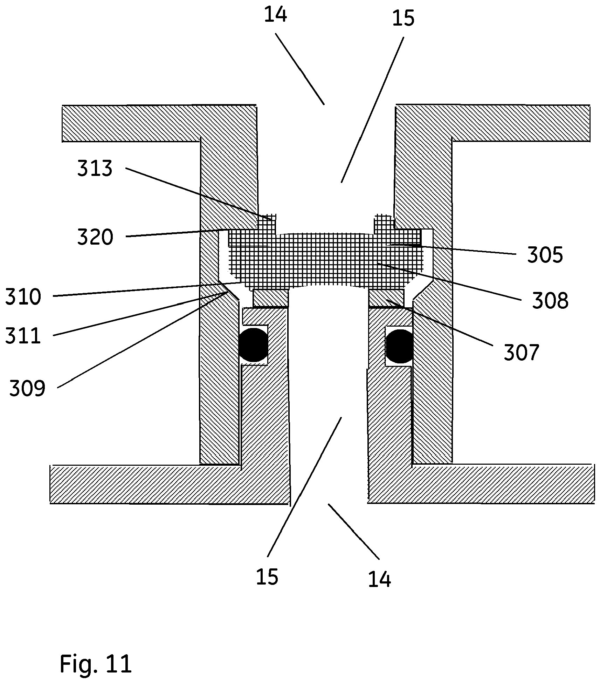

In certain embodiments, illustrated by Figs. 10 and 11, the valve member **308** is elastic, e.g. made from an elastomer such as silicone rubber, and intrinsically spring-loaded by means of integral projections **313** (e.g. rectangular or sector-shaped) extending from the valve member in the direction towards the inner aperture and engaging a bore annual rim **320.** In a closed position, a frustoconical segment **310** of the valve member can be in sealing abutment with a frustoconical bore segment **311** of the column inlet or outlet bore **15.** On connection with another column inlet or outlet, a valve opening member, e.g. projections **307** on the inlet or outlet, urges the valve member in a direction towards the inner aperture, causing frustoconical segment **310** to move away from frustoconical bore segment **311** such that the valve is in an open position and liquid can flow through the bore, between the projections **307,** through the space between segments **310** and **311** and between the projections **313.** Although Figs. 10 and 11 show a female connector with the valve member and a male connector with the valve opening member, alternative constructions are possible, e.g. with the valve member in a male connector and the valve opening member extending from a female connector.

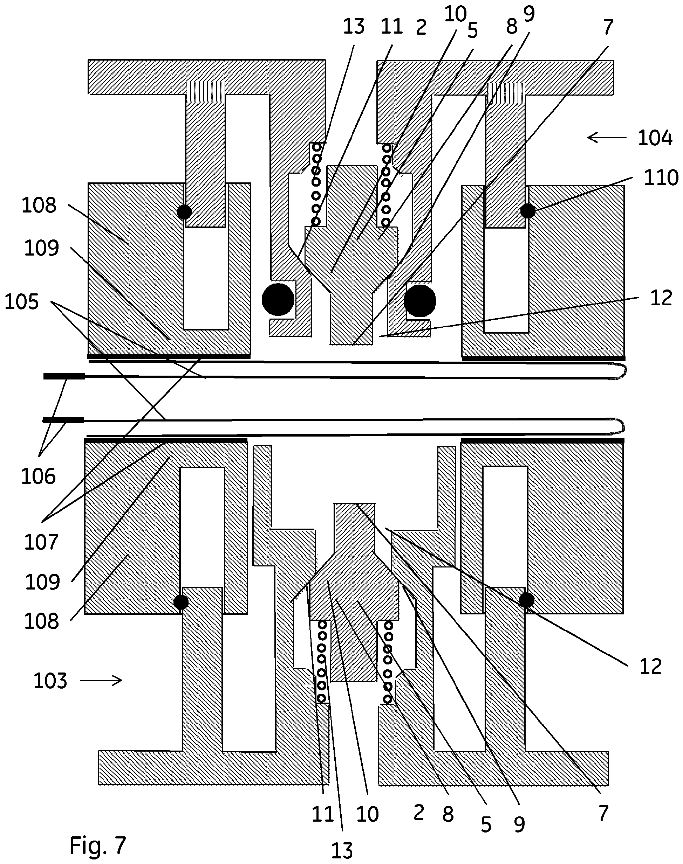

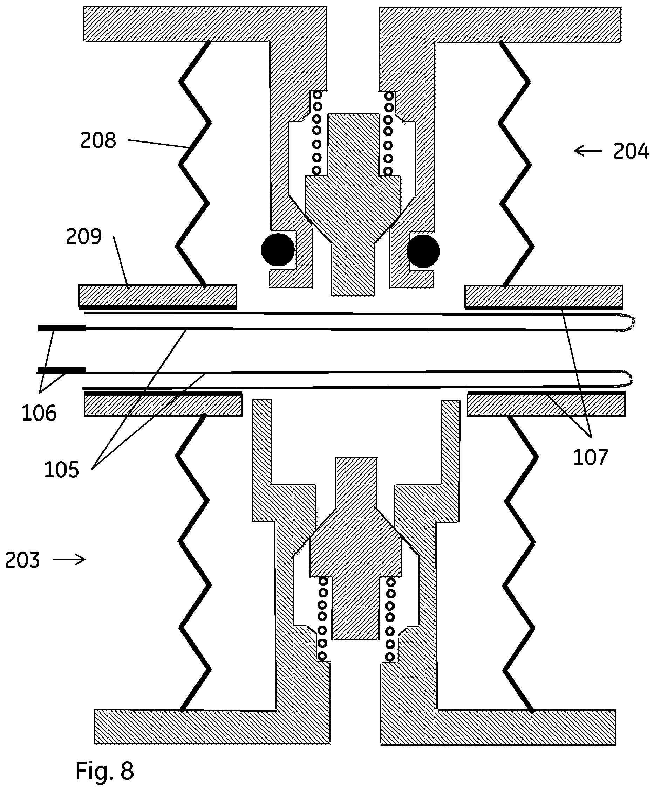

In some embodiments, illustrated by Figs. 7 and 8, each column inlet **103;203** and outlet **104;204** is an aseptic connector, comprising a folded over protective film **105** arranged to be pulled out together with a corresponding film **105** in an abutting connector, typically using tabs **106.** The folded over protective film may releasibly adhere to a flange **109;209** mounted on, or forming an integral part of, an axially movable or deformable outer side wall **108;208** surrounding the column inlet or outlet. The film can e.g. be attached with a pressure-sensitive adhesive on a foam donut **107** (or another suitable compressible substrate), attached to the flange surface. The outer side wall **108** can e.g. be telescopically movable in an axial direction relative to the column inlet or outlet, e.g. using an O-ring **110** for sealing. Alternatively, the outer side wall **208** may comprise a collapsible bellows or a flexible diaphragm that can be rolled or otherwise deformed. The outer side wall may in some embodiments be arranged to be removed after connection. This can e.g. be achieved by a line of weakening in the wall and a tab arranged to rupture the wall along the line of weakening when the tab is pulled. In other embodiments, the wall may be left in place after connection. It may then form a secondary enclosure around the connection, containing any accidental liquid leakage. If the wall is flexible and weldable, e.g. in the case of a thermoplastic bellows, it is also possible to achieve a completely enclosed disconnection of the modules. The inlet and outlet can be disconnected from each other, the bellows extended and cut and sealed using sterile welding equipment commonly available in bioprocess facilities with single use equipment.

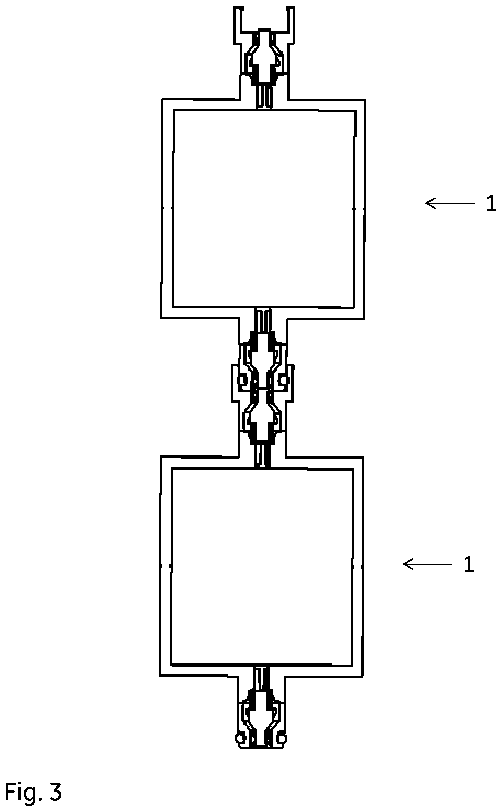

In a second aspect, illustrated by Figs. 3-5, the invention discloses a stack of at least two like chromatography column modules **1** as described above, wherein a column inlet of a first chromatography column module is fluidically connected with a column outlet of a second chromatography column module. The chromatography column modules may be packed with the same chromatography resin or they may be packed with different resins, allowing more than one step to be carried out with the stack.

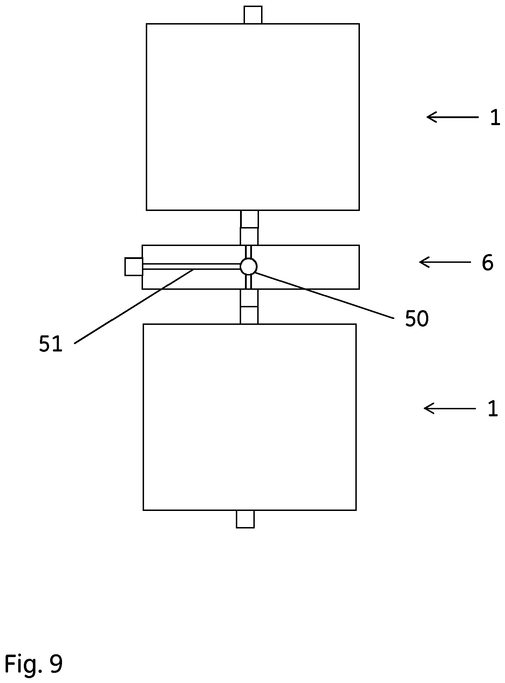

In a third aspect, illustrated by Fig. 9, the invention discloses a stack of at least two like chromatography column modules **1** as described above, wherein a column inlet of a first chromatography column module is fluidically connected with an outlet of a fluidics plate **6** and wherein an inlet of the fluidics plate is fluidically connected with a column outlet of a second chromatography column module. As above, the column modules may be packed with the same resin or with different resins.

In a fourth aspect the present invention discloses use of the stack as described above for separation of a biomolecule. The biomolecule can be e.g. a protein (e.g. an immunoglobulin), a peptide, a virus or a nucleic acid to be used as a biopharmaceutical. The biomolecule may be present in a crude feed, e.g. a clarified cell broth or in a semi-purified form, e.g. recovered from a previous chromatography step. The separation may involve clearance of impurities or contaminants such as host cell proteins, viruses, endotoxins or aggregates, fragments, variants etc. of the biomolecule. The use can involve a method comprising the steps of i) assembling a stack as discussed above, ii) passing an equilibration buffer through the stack, iii) passing a sample containing a biomolecule through the stack and iv) either recovering the biomolecule in the sample after passage of the stack in step iii) or passing an elution buffer through the stack and recovering the biomolecule in the elution buffer after passage of the stack.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A chromatography column module (1) stackable with like chromatography modules, comprising a column chamber (2) fluidically connected to a column inlet (3;103;203;303) and a column outlet (4;104;204;304), wherein said column inlet and said column outlet each comprise a valve (5;305), arranged to move from a closed position to an open position upon connection of said column inlet or outlet with a) a column outlet or inlet of a like chromatography module or b) with an outlet or inlet of a fluidics plate (6), wherein said valve comprises a spring-loaded valve member (8;308) resting on a valve seat (9;309) when the valve is in the closed position and wherein, upon connection with a column inlet or outlet of a like chromatography column module, a valve opening member (7;307) causes said valve to move to an open position by urging said valve member away from said valve seat; **characterized in that** said valve member comprises a frustoconical segment (10;310), which when the valve is in the closed position is in sealing abutment against a frustoconical bore segment (11;311) of said column inlet or outlet.

2. The chromatography column module of claim 1, wherein each of the column inlet and the column outlet further comprises a valve opening member (7;307) arranged to act upon said valve of a column inlet or outlet of a like chromatography column module upon connection.

3. The chromatography column module of any one of claims 1-2, wherein said valve opening member is integral with said valve member.

4. The chromatography column module of any one of claims 1-3, wherein said valve opening member extends through an outer aperture (12) of said column inlet or outlet.

5. The chromatography column module of any preceding claim, wherein each column inlet (103;203) and outlet (104;204) is an aseptic connector, comprising a folded over protective film (105) arranged to be pulled out together with a corresponding film (105) in an abutting connector.

6. The chromatography column module of claim 5, wherein said folded over protective film releasibly adheres to a flange (109) mounted on, or forming an integral part of, an axially movable or deformable outer side wall (108) surrounding said column inlet or outlet.

7. The chromatography column module of claim 6, wherein said outer side wall (108) is telescopically movable relative to said column inlet or outlet.

8. The chromatography column module of claim 6, wherein said outer side wall (208) comprises a bellows, such as wherein said bellows is thermoplastic.

9. The chromatography column module of any one of claims 6-8, wherein said outer side wall is arranged to be removed after connection.

10. A stack of at least two like chromatography column modules of any preceding claim, wherein a column inlet of a first chromatography column module is fluidically connected with a column outlet of a second chromatography column module.

11. A stack of at least two like chromatography column modules of any one of claims 1-9, wherein a column inlet of a first chromatography column module is fluidically connected with an outlet of a fluidics plate and wherein an inlet of said fluidics plate is fluidically connected with a column outlet of a second chromatography column module.

12. Use of the stack according to any one of claims 10-11 for separation of a biomolecule.

## Patentansprüche

1. Chromatographiesäulenmodul (1), das mit ähnlichen Chromatographiemodulen stapelbar ist, umfassend eine Säulenkammer (2), die fluidisch mit einem Säuleneinlass (3; 103; 203; 303) und einem Säulenauslass (4; 104; 204; 304) verbunden ist, wobei der Säuleneinlass und der Säulenauslass jeweils ein Ventil (5; 305) umfassen, das so eingerichtet ist, dass es sich bei Verbindung des Säuleneinlasses oder -auslasses mit a) einem Säulenauslass oder -einlass eines ähnlichen Chromatographiemoduls oder b) mit einem Auslass oder Einlass einer Fluidplatte (6) von einer geschlossenen Position in eine offene Position bewegt, wobei das Ventil ein federbelastetes Ventilelement (8; 308) umfasst, das auf einem Ventilsitz (9; 309) ruht, wenn sich das Ventil in der geschlossenen Position befindet, und wobei bei Verbindung mit einem Säuleneinlass oder -auslass eines ähnlichen Chromatographiesäulenmoduls ein Ventilöffnungselement (7; 307) bewirkt, dass sich das Ventil in eine offene Position bewegt, indem es das Ventilelement von dem Ventilsitz weg drängt;
**dadurch gekennzeichnet, dass** das Ventilelement ein kegelstumpfförmiges Segment (10; 310) umfasst, das, wenn sich das Ventil in der geschlossenen Position befindet, in dichtender Anlage gegen ein kegelstumpfförmiges Bohrungssegment (11; 311) des Säuleneinlasses oder -auslasses ist.

2. Chromatographiesäulenmodul nach Anspruch 1, wobei sowohl der Säuleneinlass als auch der Säulenauslass weiter ein Ventilöffnungselement (7; 307) umfasst, das so eingerichtet ist, dass es auf das Ventil eines Säuleneinlasses oder -auslasses eines ähnlichen Chromatographiesäulenmoduls bei Verbindung einwirkt.

3. Chromatographiesäulenmodul nach einem der Ansprüche 1 bis 2, wobei das Ventilöffnungselement einstückig mit dem Ventilelement ausgebildet ist.

4. Chromatographiesäulenmodul nach einem der Ansprüche 1-3, wobei sich das Ventilöffnungselement durch eine äußere Öffnung (12) des Säuleneinlasses oder -auslasses erstreckt.

5. Chromatographiesäulenmodul nach einem vorstehenden Anspruch, wobei jeder Säuleneinlass (103; 203) und -auslass (104; 204) ein aseptischer Verbinder ist, der einen umgefalteten Schutzfilm (105) umfasst, der so eingerichtet ist, dass er zusammen mit einem entsprechenden Film (105) in einem anliegenden Verbinder herausgezogen werden kann.

6. Chromatographiesäulenmodul nach Anspruch 5, wobei der umgefaltete Schutzfilm lösbar an einem Flansch (109) haftet, der an einer axial beweglichen oder verformbaren äußeren Seitenwand (108), die den Säuleneinlass oder -auslass umgibt, angebracht ist oder einen integralen Teil davon bildet.

7. Chromatographiesäulenmodul nach Anspruch 6, wobei die äußere Seitenwand (108) relativ zum Säuleneinlass oder -auslass teleskopartig beweglich ist.

8. Chromatographiesäulenmodul nach Anspruch 6, wobei die äußere Seitenwand (208) einen Faltenbalg umfasst, wobei der Faltenbalg beispielsweise thermoplastisch ist.

9. Chromatographiesäulenmodul nach einem der Ansprüche 6-8, wobei die äußere Seitenwand so angeordnet ist, dass sie nach einem Verbinden entfernt werden kann.

10. Stapel aus mindestens zwei ähnlichen Chromatographiesäulenmodulen nach einem vorstehenden Anspruch, wobei ein Säuleneingang eines ersten Chromatographiesäulenmoduls mit einem Säulenausgang eines zweiten Chromatographiesäulenmoduls fluidisch verbunden ist.

11. Stapel aus mindestens zwei ähnlichen Chromatographiesäulenmodulen nach einem der Ansprüche 1-9, wobei ein Säuleneinlass eines ersten Chromatographiesäulenmoduls mit einem Auslass einer Fluidplatte fluidisch verbunden ist und wobei ein Einlass der Fluidplatte mit einem Säulenauslass eines zweiten Chromatographiesäulenmoduls fluidisch verbunden ist.

12. Verwendung des Stapels nach einem der Ansprüche 10-11 zur Trennung eines Biomoleküls.

## Revendications

1. Module de colonne de chromatographie (1) pouvant être empilé avec des modules de chromatographie identiques, comprenant une chambre de colonne (2) connectée de manière fluidique à une entrée de colonne (3 ; 103; 203 ; 303) et une sortie de colonne (4; 104; 204; 304), dans lequel ladite entrée de colonne et ladite sortie de colonne comprennent chacune une valve (5 ; 305), agencée pour passer d'une position fermée à une position ouverte lors de la connexion de ladite entrée ou sortie de colonne à a) une sortie ou entrée de colonne d'un module de chromatographie identique ou b) à une sortie ou entrée d'une plaque fluidique (6), dans lequel ladite valve comprend un élément de valve à ressort (8 ; 308) reposant sur un siège de valve (9 ; 309) quand la valve est en position fermée et dans lequel, lors d'une connexion à une entrée ou sortie de colonne d'un module de colonne de chromatographie identique, un élément d'ouverture de valve (7 ; 307) amène ladite valve à se déplacer vers une position ouverte en poussant ledit élément de valve à l'écart dudit siège de valve ;
**caractérisé en ce que** ledit élément de valve comprend un segment tronconique (10 ; 310) qui, quand la valve est en position fermée, est en butée d'étanchéité contre un segment d'alésage tronconique (11; 311) de ladite entrée ou sortie de colonne.

2. Module de colonne de chromatographie selon la revendication 1, dans lequel chacune parmi l'entrée de colonne et la sortie de colonne comprend en outre un élément d'ouverture de valve (7 ; 307) agencé pour agir sur ladite valve d'une entrée ou sortie de colonne d'un module de colonne de chromatographie identique lors d'une connexion.

3. Module de colonne de chromatographie selon l'une quelconque des revendications 1 et 2, dans lequel ledit élément d'ouverture de valve fait partie intégrante dudit élément de valve.

4. Module de colonne de chromatographie selon l'une quelconque des revendications 1 à 3, dans lequel ledit élément d'ouverture de valve s'étend à travers une ouverture externe (12) de ladite entrée ou sortie de colonne.

5. Module de colonne de chromatographie selon l'une quelconque des revendications précédentes, dans lequel chaque entrée (103 ; 203) et sortie (104 ; 204) de colonne est un raccord aseptique, comprenant un film protecteur replié (105) agencé pour être retiré conjointement avec un film correspondant (105) dans un raccord en butée.

6. Module de colonne de chromatographie selon la revendication 5, dans lequel ledit film protecteur replié adhère de manière amovible à une bride (109) montée sur, ou formant une seule pièce avec, une paroi latérale externe (108) mobile axialement ou déformable entourant ladite entrée ou sortie de colonne.

7. Module de colonne de chromatographie selon la revendication 6, dans lequel ladite paroi latérale externe (108) est mobile de manière télescopique par rapport à ladite entrée ou sortie de colonne.

8. Module de colonne de chromatographie selon la revendication 6, dans lequel ladite paroi latérale externe (208) comprend un soufflet, tel que dans lequel ledit soufflet est thermoplastique.

9. Module de colonne de chromatographie selon l'une quelconque des revendications 6 à 8, dans lequel ladite paroi latérale externe est agencée pour être retirée après connexion.

10. Empilement d'au moins deux modules de colonne de chromatographie identiques selon l'une quelconque des revendications précédentes, dans lequel une entrée de colonne d'un premier module de colonne de chromatographie est connectée de manière fluidique à une sortie de colonne d'un second module de colonne de chromatographie.

11. Empilement d'au moins deux modules de colonne de chromatographie identiques selon l'une quelconque des revendications 1 à 9, dans lequel une entrée de colonne d'un premier module de colonne de chromatographie est connectée de manière fluidique à une sortie d'une plaque fluidique et dans lequel une entrée de ladite plaque fluidique est connectée de manière fluidique à une sortie de colonne d'un second module de colonne de chromatographie.

12. Utilisation de l'empilement selon l'une quelconque des revendications 10 et 11 à des fins de séparation d'une biomolécule.
